# DEMANDE DE BREVET EUROPEEN

(11) **EP 1 493 945 A1**
(43) Date de publication de la demande: **05.01.2005**
(21) Numéro de dépôt: 04014768.8
(22) Date de dépôt: 24.06.2004
(51) Int. Cl.: F16H 25/18

(54) **Dispositif de conversion d'un mouvement angulaire en mouvement linéaire**

(30) Priorité: 02.07.2003 FR 0308242
(71) Demandeur: The Channel Tunnel Group Limited, Kent, Folkestone CT19 4QS (GB); France Manche S.A., 75008 Paris (FR)
(72) Inventeur: Herold, Dominique Cabinet Ballot, 25000 Besancon (FR)
(74) Mandataire: Bentz, Jean-Paul

(57) **Abrégé**

La présente invention concerne un dispositif de conversion 1 d'un mouvement angulaire en mouvement linéaire, comportant une came 30 dont la mise en rotation par un élément rotatif primaire 10 est apte à entraîner en déplacement un élément secondaire 20 monté mobile en translation.

L'invention est remarquable en ce que le dispositif de conversion 1 comporte en outre un organe intermédiaire 40, formant interface, qui est intercalé entre la came 30 et l'élément secondaire 20, et qui est apte à coopérer par contact glissant avec la came 30 et par contact avec l'élément secondaire 20, tout au long de la rotation de ladite came 30 par rapport audit élément secondaire 20.

## Description

La présente invention concerne un dispositif permettant de transformer un mouvement angulaire en un mouvement linéaire.

L'invention trouve une application particulièrement avantageuse, mais non exclusive, dans le domaine des dispositifs de détection de position.

Il est connu d'utiliser une came pour convertir une rotation animant un élément primaire, en une translation axiale exploitable par un élément secondaire. Ce principe est notamment utilisé par une certaine catégorie de détecteurs de position. De manière schématique, ce type de dispositifs comporte tout d'abord un bras rotatif, formant élément primaire, qui est susceptible d'être entraîné en basculement lors d'un rapprochement relatif avec une butée. Ce bras rotatif est par ailleurs solidaire d'une came qui coopère par contact avec la partie active d'un capteur standard, c'est-à-dire une pointe de touche montée mobile en translation et formant élément secondaire.

Ce type de dispositif de détection présente toutefois l'inconvénient d'être peu fiable du fait que sa mise en oeuvre génère, au niveau de la partie mobile du capteur, des contraintes physiques qui peuvent s'avérer destructrices. La mise en rotation de la came, par basculement du bras rotatif, engendre en effet une force de poussée qui se décompose en une composante longitudinale et une composante transversale par rapport à la direction de déplacement de la partie mobile du capteur. Or si la composante longitudinale est bien en mesure de générer la translation axiale de la pointe de touche, la composante transversale est quant à elle de nature à détériorer le capteur puisqu'elle s'exerce perpendiculairement à l'axe de mobilité de ladite pointe de touche.

Pour remédier à cette difficulté, on pourrait imaginer éliminer les efforts transversaux à l'extrémité distale de la pointe de touche en dotant le dispositif de détection d'un classique système à poussoirs et basculeurs, ou de tout autre mécanisme équivalent susceptible de n'exercer qu'une action longitudinale sur la partie mobile du capteur. Mais cela reviendrait alors à augmenter la complexité du dispositif de conversion de mouvement, ce qui au final compromettrait la fiabilité globale de l'ensemble.

Aussi le problème technique à résoudre, par l'objet de la présente invention, est de proposer un dispositif de conversion d'un mouvement angulaire en mouvement linéaire, comportant une came dont la mise en rotation par un élément rotatif primaire est apte à entraîner en déplacement un élément secondaire monté mobile en translation, dispositif de conversion qui permettrait d'éviter les problèmes de l'état de la technique en offrant notamment une fiabilité sensiblement améliorée, tout en demeurant d'une grande simplicité structurelle.

La solution au problème technique posé consiste, selon la présente invention, en ce que le dispositif de conversion comporte en outre un organe intermédiaire, formant interface, qui est intercalé entre la came et l'élément secondaire, et qui est apte à coopérer par contact glissant avec la came et par contact avec l'élément secondaire, tout au long de la rotation de ladite came par rapport audit élément secondaire.

L'invention telle qu'ainsi définie présente l'avantage de constituer une solution extrêmement simple pour supprimer les contraintes mécaniques qui s'exercent perpendiculairement à la direction de déplacement de l'élément secondaire, et qui résultent de la composante transversale de la force de poussée exercée par la came. L'invention permet ainsi de transmettre à l'élément secondaire uniquement la composante de la force de poussée qui est directement utilisable pour engendrer sa translation, c'est-à-dire la composante longitudinale qui est colinéaire à l'axe de mobilité dudit élément secondaire. L'intégrité mécanique de l'élément secondaire se voit ainsi avantageusement préservée, au bénéfice de la fiabilité de l'ensemble du mécanisme dans lequel le dispositif de conversion est monté.

La présente invention concerne également les caractéristiques qui ressortiront au cours de la description qui va suivre, et qui devront être considérées isolément ou selon toutes leurs combinaisons techniques possibles.

Cette description donnée à titre d'exemple non limitatif, fera mieux comprendre comment l'invention peut être réalisée, en référence aux dessins annexés sur lesquels:
La figure 1 est une vue de face qui illustre un dispositif de détection de position pourvu d'un dispositif de conversion de mouvement selon un mode de réalisation particulier de l'invention.
La figure 2 constitue une vue de profil du dispositif de détection de la figure 1.
La figure 3 est une vue similaire à la figure 1, qui représente un dispositif de détection doté d'un dispositif de conversion de mouvement selon une variante de réalisation de l'invention.
La figure 4 montre schématiquement un dispositif de commande de soupapes comportant un dispositif de conversion de mouvement conforme à l'invention.

Pour des raisons de clarté, les mêmes éléments ont été désignés par des références identiques. De même, seuls les éléments essentiels pour la compréhension de l'invention ont été représentés, et ceci sans respect de l'échelle et de manière schématique.

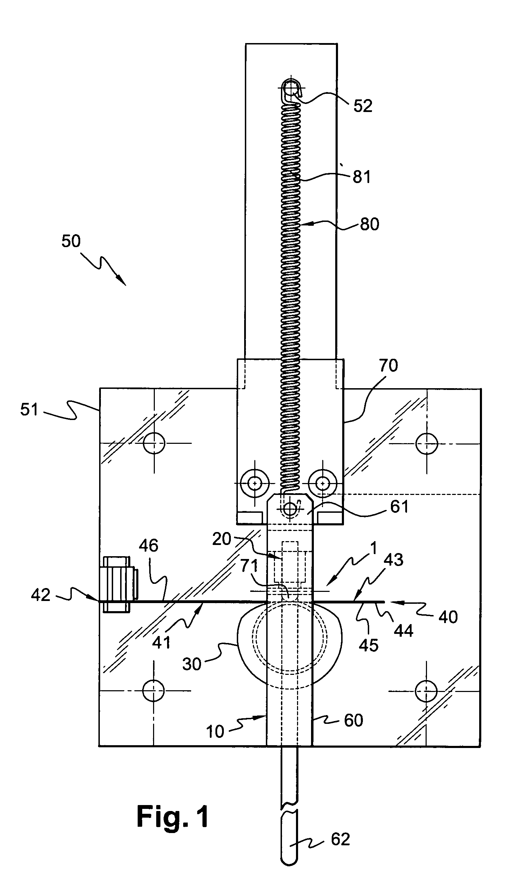

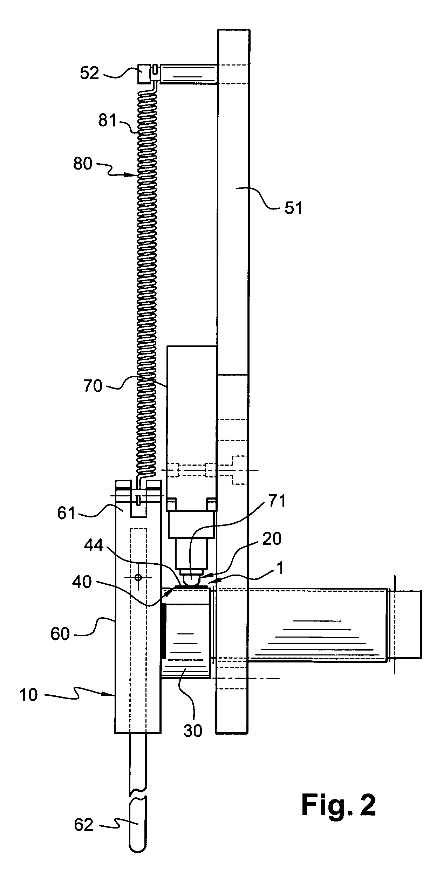

Les figures 1 et 2 font apparaître un premier exemple d'application dans lequel un dispositif de conversion 1 est utilisé pour transformer un mouvement angulaire animant un élément primaire 10 monté mobile en rotation, en un mouvement linéaire directement exploitable par un élément secondaire 20 monté mobile en translation.

Ainsi qu'on peut le voir sur ces deux figures, le dispositif de conversion de mouvement 1 comporte une came 30 qui est solidaire de l'élément primaire 10, et qui est par conséquent susceptible d'être entraîné en rotation lors d'un déplacement dudit élément primaire 10. L'ensemble est agencé de manière à ce que la mise en rotation de la came 30 soit en mesure d'entraîner en translation l'élément secondaire 20.

Conformément à l'objet de la présente invention, le dispositif de conversion 1 comporte en outre un organe intermédiaire 40, formant interface, qui est intercalé entre la came 30 et l'élément secondaire 20. Cet organe intermédiaire 40 est par ailleurs apte à coopérer par contact glissant avec la came 30 et par contact avec l'élément secondaire 20, tout au long de la rotation de ladite came 30 par rapport audit élément secondaire 20.

Ainsi interposé, l'organe intermédiaire 40 est en mesure d'absorber les contraintes mécaniques générées par la composante transversale de la force de poussée exercée par la came, en lieu et place de l'élément secondaire 20. En outre, étant par ailleurs susceptible d'être déplacé suivant la direction de translation de l'élément secondaire 20, l'organe intermédiaire 40 est concomitamment en mesure de transmettre la composante longitudinale de la force de poussée audit élément secondaire 20, et donc d'entraîner la translation de ce dernier.

Selon un mode de réalisation actuellement préféré de l'invention, l'organe intermédiaire 40 est constitué par un élément souple 41 qui est doté d'une partie fixe 42 et d'une partie libre 43 apte à se déformer. L'ensemble est conformé de manière à ce que la partie libre 43 de l'élément souple 41 présente, d'une part, une première portion de surface qui soit en mesure de coopérer par contact glissant avec la came 30, et d'autre part, une seconde portion de surface qui soit capable de coopérer quant à elle par contact avec l'élément secondaire 20.

La capacité de déformation de l'élément souple 41 est destinée à permettre le déplacement de sa partie libre 43 qui peut ainsi rester au contact de la came 30 et de l'élément secondaire 20, tout au long de la rotation de ladite came 30 par rapport audit élément secondaire 20. Il est à noter que cette souplesse peut résulter de la flexibilité intrinsèque du matériau constituant l'élément souple 41 et/ou de la flexibilité de la structure composant ledit élément souple 41. On pense ici par exemple à une structure composite constituée par un assemblage d'éléments rigides articulés.

De manière particulièrement avantageuse, l'élément souple 41 est constitué ici par une lame flexible 44 dont une extrémité est fixe et dont l'autre extrémité est apte à être déplacée, par déformation élastique de la partie libre 43 de ladite lame flexible 44. L'ensemble est agencé de manière à ce que l'une des faces 45 de la partie libre 43 en question soit en mesure de coopérer par contact glissant avec la came 30, et que la face opposée 46 soit capable de coopérer par contact avec l'élément secondaire 20.

Dans le premier exemple d'application des figures 1 et 2, le dispositif de conversion 1 fait partie intégrante d'un dispositif de détection de position 50 qui se présente classiquement sous la forme d'une platine support 51 sur laquelle sont notamment montés un bras rotatif 60, ainsi qu'un capteur à contact linéaire 70. Le bras rotatif 60, formant élément primaire 10, est ici monté mobile en basculement dans un plan parallèle à la platine support 51. Il est ainsi susceptible d'être entraîné en basculement lors d'un rapprochement relatif avec une butée externe positionnée de manière ad hoc. Le capteur à contact linéaire 70 est quant à lui de type standard, en ce sens que sa partie active est constituée par une pointe de touche 71, formant élément secondaire 20, qui est montée mobile en translation.

Conformément à l'objet de l'invention précédemment décrit, la transformation du mouvement angulaire animant le bras rotatif 60, en un mouvement linéaire exploitable par la partie mobile du capteur 70, est réalisée par le dispositif de conversion 1. Le bras rotatif 60 est en effet solidaire de la came 30 qui coopère par ailleurs avec la pointe de touche 71 du capteur 70 via la lame flexible 44, formant élément souple 41 et plus généralement organe intermédiaire 40.

Selon une particularité de ce premier exemple d'application de l'invention, le déplacement angulaire du bras rotatif 60 est limité de part et d'autre d'une position médiane, par des moyens de rappel élastique 80 se présentant ici sous la forme d'un ressort spiral 81. Ainsi qu'on peut le voir notamment sur la figure 1, le ressort de rappel 81 est mis en tension entre une patte de fixation 52 solidaire de la platine support 51, et l'extrémité 61 du bras rotatif 60 qui est diamétralement opposée à l'extrémité 62 destinée à entrer en contact avec la butée externe.

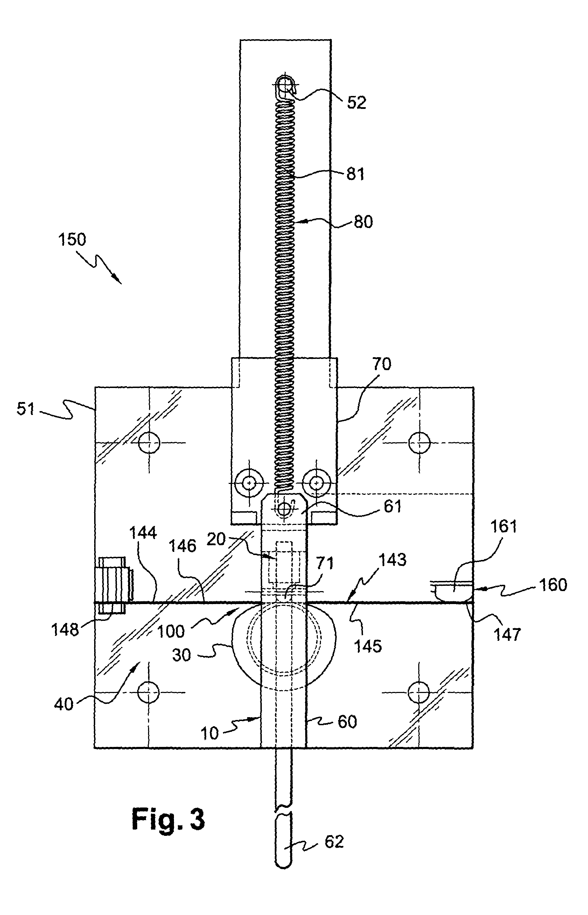

La figure 3 représente un dispositif de détection de position 150 qui est doté d'un dispositif de conversion 100 selon une variante de réalisation. Le dispositif de conversion 100 se singularise par le fait que la partie libre 143 de la lame flexible 144 coopère avec des moyens de butée 160 aptes à bloquer le déplacement de sa portion distale 147, suivant une direction sensiblement perpendiculaire au plan dans lequel ladite lame flexible 144 s'étend lorsqu'elle n'est soumise à aucune déformation. Le blocage réalisé ici n'est bien évidemment pas total afin de permettre à la lame flexible 144 de se déformer pour remplir pleinement son rôle d'interface, c'est-à-dire de rester au contact à la fois de la came 30 et de la pointe de touche 71 au cours de la rotation de ladite came 30 par rapport à ladite pointe de touche 71.

Dans le mode particulier de réalisation de la figure 3, les moyens de butée 160 comportent une butée ponctuelle 161 qui est positionnée en regard de la face 146 de la lame flexible 144, qui est opposée à la face 145 avec laquelle la came 30 coopère par contact glissant. Cela signifie en d'autres termes que la butée ponctuelle 161 est disposée du même côté que l'élément secondaire 20, en l'occurrence la pointe de touche 71. Elle est ainsi en mesure de contrer efficacement le déplacement de la partie distale 147 de la lame flexible 144 lors de la rotation de la came 30, sans pour autant limiter la déformation de la partie centrale de ladite lame flexible 144, dont la fonction d'interface est par conséquent parfaitement préservée.

De manière parfaitement avantageuse, la butée ponctuelle 161 est positionnée de manière affleurante par rapport au plan dans lequel la lame flexible 144 s'étend lorsqu'elle n'est soumise à aucune déformation. Cela signifie que la butée ponctuelle 161 est en permanence en contact de la lame flexible 144, et qu'elle est par conséquent en mesure de jouer pleinement son rôle sans temps de réponse.

Conformément à une autre caractéristique avantageuse de l'invention, la butée ponctuelle 161 est positionnée de manière symétrique au point de fixation 148 de la lame flexible 144, par rapport à l'élément secondaire 20. Cette caractéristique permet de générer une déformation sensiblement symétrique de la lame flexible 144 lorsque cette dernière est soumise à l'action de la came 30. Elle est par conséquent compatible avec l'utilisation d'une came 30 au profil symétrique.

Selon un autre mode de réalisation de l'invention, le dispositif de conversion 1, 100 pourrait comporter un organe intermédiaire 40 constitué par un élément rigide qui serait monté mobile en déplacement. L'ensemble serait alors agencé de manière à ce qu'une première portion de surface de l'élément rigide soit en mesure de coopérer par contact glissant avec la came 30, tandis qu'une seconde portion de surface serait apte à coopérer par contact avec l'élément secondaire 20.

Dans ce cas de figure, l'élément rigide pourrait alors être avantageusement monté mobile en déplacement suivant une direction sensiblement colinéaire à la direction de translation de l'élément secondaire 20.

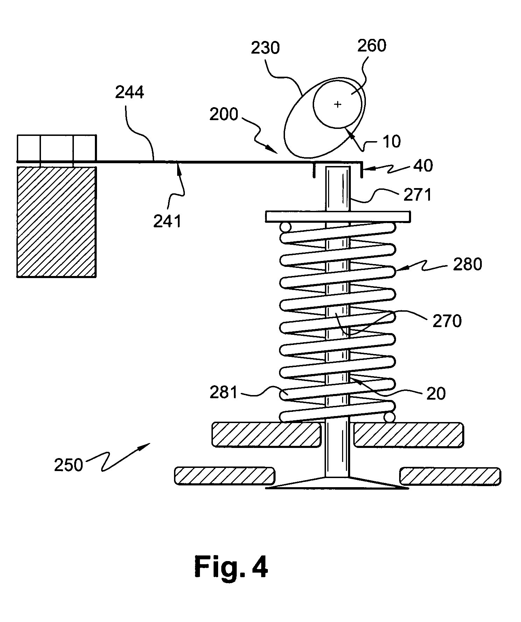

La figure 4 représente quant à elle schématiquement un second exemple d'application dans lequel un dispositif de conversion 200 est utilisé en tant que composant essentiel d'un dispositif de commande de soupapes 250 pour moteur à explosion.

On remarque que le dispositif de commande 250 comporte classiquement un arbre d'entraînement 260, formant élément primaire 10, qui est monté mobile en rotation. On observe également la présence d'une came 230 qui est solidaire de l'arbre d'entraînement 260. Enfin on distingue une soupape 270, formant élément secondaire 20, qui est montée mobile en translation et qui est classiquement maintenue en position fermée sur son siège par des moyens de rappel élastique 280 se présentant ici sous la forme d'un classique ressort spiral 281.

Conformément à l'invention précédemment décrite, la transformation du mouvement angulaire animant l'arbre d'entraînement 260, en un mouvement linéaire exploitable par la soupape 270, est réalisée par le dispositif de conversion 200. La came 230, qui est entraînée en rotation par l'arbre 260, coopère en effet avec la queue 271 de la soupape 270 via une lame flexible 244, formant élément souple 241 et plus généralement organe intermédiaire 40.

L'invention concerne ainsi tout dispositif de commande de soupapes 250 comportant un tel dispositif de conversion 200. Le nombre d'arbres d'entraînement 260 et de cames 230 peut bien entendu être variable en fonction du nombre de soupapes 270 à commander.

En permettant la suppression des culbuteurs et autres poussoirs, l'invention est en mesure de simplifier la cinématique des hauts moteur des mécaniques à explosion de type quatre temps. Cette caractéristique permet tout d'abord de gagner en compacité. Elle permet ensuite de réduire les masses en mouvement, autorisant ainsi le moteur à prendre plus de régime et donc à développer plus de puissance.

## Revendications

1. Dispositif de conversion (1, 100, 200) d'un mouvement angulaire en mouvement linéaire, comportant une came (30, 230) dont la mise en rotation par un élément rotatif primaire (10) est apte à entraîner en déplacement un élément secondaire (20) monté mobile en translation, un organe intermédiaire (40), formant interface, étant intercalé entre la came (30, 230) et l'élément secondaire (20), et apte à coopérer par contact glissant avec la came (30, 230) et par contact avec l'élément secondaire(20), tout au long de la rotation de ladite came (30, 230) par rapport audit élément secondaire (20), **caractérisé en ce que** l'organe intermédiaire (40) comporte un élément souple (41, 241) qui est doté d'une partie fixe (42) et d'une partie libre (43, 143) apte à se déformer, la partie libre (43, 143) de l'élément souple (41) comportant une première portion de surface apte à coopérer par contact glissant avec la came (30, 230), ainsi qu'une seconde portion de surface apte à coopérer par contact avec l'élément secondaire (20).

2. Dispositif de conversion (1, 100, 200) selon la revendication 1, **caractérisé en ce que** l'élément souple (41, 241) est constitué par une lame flexible (44, 144, 244) dont une extrémité est fixe et dont l'autre extrémité est apte à être déplacée par déformation élastique de la partie libre de la lame (44, 144, 244), l'une des faces (45, 145) de ladite partie libre (43, 143) étant apte à coopérer par contact glissant avec la came (30, 230), la face opposée (46, 146) étant apte à coopérer par contact avec l'élément secondaire (20).

3. Dispositif de conversion (100) selon l'une des revendications 1 ou 2, **caractérisé en ce que** la partie libre (143) de la lame flexible (144) coopère avec des moyens de butée (160) aptes à bloquer le déplacement de sa portion distale (147), suivant une direction sensiblement perpendiculaire au plan dans lequel ladite lame flexible (144) s'étend lorsqu'elle n'est soumise à aucune déformation.

4. Dispositif de conversion (100) selon la revendication 3, **caractérisé en ce que** les moyens de butée (160) comportent une butée ponctuelle (161) qui est positionnée en regard de la face (146) de la lame flexible (144), qui est opposée à la face (145) avec laquelle la came (30) coopère par contact glissant.

5. Dispositif de conversion (100) selon la revendication 4, **caractérisé en ce que** la butée ponctuelle (161) est positionnée de manière affleurante par rapport au plan dans lequel la lame flexible (144) s'étend lorsqu'elle n'est soumise à aucune déformation.

6. Dispositif de conversion (100) selon l'une des revendications 4 ou 5, **caractérisé en ce que** la butée ponctuelle (161) est positionnée de manière symétrique au point de fixation (148) de la lame flexible (144), par rapport à l'élément secondaire (20).

7. Dispositif de conversion (1, 100, 200) selon l'une quelconque des revendications 1 à 6, **caractérisé en ce que** la came (30, 230) présente un profil symétrique.

8. Dispositif de détection de position (50, 150) comportant un bras rotatif (60), formant élément primaire (10), qui est monté mobile en basculement dans un plan donné et qui est destiné à être entraîné en rotation lors d'un rapprochement relatif avec une butée externe positionnée dans ledit plan de basculement, une came (30) qui est solidaire du bras rotatif (60), ainsi qu'un capteur (70) dont la partie active (71), formant élément secondaire (20), est montée mobile en translation, **caractérisé en ce que** la transformation du mouvement angulaire animant le bras rotatif (60), en un mouvement linéaire utilisable par la partie active (71) du capteur (70), est réalisée par un dispositif de conversion (1, 100) selon l'une quelconque des revendications précédentes.

9. Dispositif de détection (50, 150) selon la revendication 8, **caractérisé en ce que** le déplacement angulaire du bras rotatif (60) est limité de part et d'autre d'une position médiane, par des moyens de rappel élastique (80).

10. Dispositif de commande (250) d'au moins une soupape (270) de moteur à explosion, comportant un arbre d'entraînement (260) formant élément primaire (10) monté mobile en rotation, au moins une came (230) solidaire à l'arbre d'entraînement (260), et au moins une soupape (270) formant élément secondaire (20) montée mobile en translation, **caractérisé en ce que** la transformation du mouvement angulaire animant l'arbre d'entraînement (260), en un mouvement linéaire utilisable par chaque soupape (270), est réalisée par un dispositif de conversion (200) selon l'une quelconque des revendications 1 à 7.
